# EUROPÄISCHE PATENTSCHRIFT

(11) **EP 3 293 588 B1**
(45) Veröffentlichungstag und Bekanntmachung des Hinweises auf die Patenterteilung: **05.02.2020**
(21) Anmeldenummer: 16187810.3
(22) Anmeldetag: 08.09.2016
(51) Int. Cl.: G05B 15/02

(54) **VERFAHREN ZUR PROVISIONIERUNG VON RAUMAUTOMATIONSKOMPONENTEN EINES GEBÄUDEAUTOMATIONSSYSTEMS**
METHOD FOR PROVISIONING ROOM AUTOMATION COMPONENTS OF A BUILDING AUTOMATION SYSTEM
PROCÉDÉ D'APPROVISIONNEMENT DE COMPOSANTS D'AUTOMATISATION DE PIÈCES D'UN SYSTÈME DOMOTIQUE

(43) Veröffentlichungstag der Anmeldung: 14.03.2018
(73) Patentinhaber: Siemens Schweiz AG, 8047 Zürich (CH)
(72) Erfinder: KRAMMER, Lukas, 1220 Wien (AT); LECHNER, Daniel, 2170 Poysdorf (AT)
(74) Vertreter: Maier, Daniel Oliver

(56) Entgegenhaltungen:
- EP-A1- 2 704 365
- EP-A1- 2 890 057
- WO-A2-2008/027964

## Beschreibung

### Technisches Gebiet

Die gegenständliche Erfindung betrifft allgemein das Gebiet der Gebäudetechnik und Gebäudeautomation. Im Speziellen bezieht sich die vorliegende Erfindung auf ein Verfahren zur Provisionierung und zur einfacheren Konfiguration von Raumautomationskomponenten eines Gebäudeautomationssystems während einer Installations- und Konfigurationsphase. Dabei wird für die Provisionierung und Konfiguration der Raumautomationskomponenten eine zentrale Konfigurationseinheit eingesetzt, welche mit dem Gebäudeautomationssystem direkt in Verbindung steht.

### Stand der Technik

Viele moderne und modernisierte Gebäude im kommerziellen und/oder öffentlichen Bereich sowie im privaten Bereich werden heutzutage mit Gebäudeautomationssystemen ausgestattet, um beispielsweise Beleuchtung, Klimatisierung, Beschattung, Heizung bzw. Raumklima, etc. automatisch zu steuern und zu regeln. Dazu kann ein Gebäudeautomationssystem verschiedene Systeme wie z.B. Sicherheitssysteme, Brandschutzsysteme, Lichtsteuerungssysteme, Beschattungssysteme sowie sogenannte HLK-Systeme (Heizung, Lüftung, Klimatechnik) mit einer Vielzahl an Komponenten umfassen, von welchen der Betrieb eines oder mehrerer Gebäude überwacht, gesteuert und geregelt wird. Ein Gebäudeautomationssystem ist damit eine wichtige Basis für ein Gebäudemanagement. Zielsetzung für einen Einsatz eines Gebäudeautomationssystems ist üblicherweise gewerkübergreifend Funktionsabläufe selbsttätig bzw. automatisch anhand von vorgegebenen Parametern durchzuführen und/oder einen Betrieb bzw. die Überwachung des Betriebs eines oder mehrerer Gebäude zu vereinfachen.

Gebäudeautomationssysteme sind meist dezentral aufgebaut und beinhalten neben Komponenten zur Steuerung von so genannten Primäranlagen (z.B. Wärme- und Kälteerzeugung/-verteilung) eine Vielzahl an kommunikationsfähigen Raumautomationskomponenten mit jeweils einem speziellen Leistungsumfang wie z.B. Sensoren, Aktoren, Steuereinheiten, Bediengeräte, usw. Erst durch ein Zusammenspiel von mehreren Komponenten wird beispielsweise ein selbsttätiger bzw. automatischer Funktionsablauf wie z.B. eine Ansteuerung oder Regelung eines Beleuchtungs- und/oder Heizungssystems für eine Konstantlicht- oder Tageslichtregelung, eine Steuerung eines Raumklimas bzw. der Raumtemperatur, etc. ermöglicht. Für ein Zusammenspiel der jeweiligen Komponenten sowie für eine komfortable Bedienung ist es notwendig, dass alle Komponenten (z.B. Sensoren, Aktoren, Steuereinheiten, Bedienelemente, Verbraucher und anderen technischen Einheiten) für einen Datenaustausch miteinander über ein Kommunikationsnetzwerk wie z.B. ein Bussystem interagieren. Die wichtigsten, offenen und genormten Bussysteme, welche für die Vernetzung der Komponenten in der Gebäudeautomation zum Einsatz kommen, sind beispielsweise der europäische Installationsbus (EIB/KNX), der im KNX-Standard beschrieben ist, oder ein Feldbus nach den so genannten Local Operating Network (LON)-Standard.

Eine wesentliche Basis für eine fehlerfreie und gewünschte Funktionsweise des Gebäudeautomationssystems ist üblicherweise das so genannte Engineering, welches bei einer Installation bzw. bei einer Inbetriebnahme oder bei einer Erweiterung eines Gebäudeautomationssystems durchgeführt wird. Im Speziellen spielt dabei die so genannte Provisionierung von Raumautomationskomponenten wie z.B. Sensoren und Aktoren ein wichtige Rolle, durch welche die jeweilige Raumautomationskomponenten für die jeweilige Funktionsweise im Gebäudeautomationssystem vorbereitet sowie eingerichtet bzw. konfiguriert werden. Damit werden die Raumautomationskomponenten in das Gebäudeautomationssystem integriert. Wesentlich für die Provisionierung und den späteren Betrieb des Gebäudeautomationssystems (d.h. für die Interaktion zwischen Sensoren und Aktoren) ist dabei eine Identifikation und Adressierung der einzelnen Komponenten im Gebäude oder in einem Gebäudeverbund. D.h. alle Komponenten eines Gebäudeautomationssystems müssen über ein Kommunikationsnetzwerk mittels einer Adresse eindeutig identifizierbar oder ansprechbar sein und ihre Lage muss innerhalb eines Gebäudes bekannt sein.

Eine mögliche Herangehensweise an die Provisionierung und Konfiguration von Raumautomationskomponenten, die beispielsweise bei Gebäudeautomationssystemen mit EIB/KNX- oder LON-Bussystem eingesetzt wird, ist die so genannte Vorab-Provisionierung. Dabei werden die jeweiligen Komponenten entsprechend ihrer zukünftigen Position und Funktion vorab adressiert und konfiguriert. Bei der Vorab-Provisionierung ist es aber notwendig, dass die jeweiligen Komponenten für den Betrieb exakt an der vorgegebenen Position im Gebäude bzw. Gebäudekomplex angebracht werden. Das bedeutet, dass für die Installation beispielsweise eine vollständige Dokumentation des geplanten Gebäudeautomationssystems zur Verfügung stehen muss, einzelnen Komponenten z.B. mit den exakten Montagepositionen gekennzeichnet und dem Montagepersonal diese mitgeteilt werden müssen. Bei fehlerhafter oder unvollständiger Dokumentation des geplanten Systems kann es daher zu großen Zusatzaufwänden für z.B. Adaptierungsmaßnahmen kommen. Montagefehler, welche üblicherweise erst bei Funktionstests von größeren Systemteilen festgestellt werden können, können zu einem Fehlverhalten des gesamten Gebäudeautomationssystems führen und müssen in weiterer Folge aufwendig korrigiert werden.

Eine weitere, mögliche Herangehensweise an die Provisionierung und Konfiguration von Komponenten eines Gebäudeautomationssystems ist eine so genannte On-Site-Provisionierung. Bei dieser Herangehensweise werden die einzelnen bereits verbauten und über das Kommunikationsnetzwerk verbundenen Raumautomationskomponenten während der Installation identifiziert. Bei den üblicherweise eingesetzten Gebäudeautomationssystemen mit EIB/KNX- oder LON-Bussystemen ist Provisionierung z.B. eine manuelle Betätigung von Hardware-Tasten in Kombination mit einer Integration in eine so genannte Engineering-Komponente des Systems erforderlich. Üblicherweise sind dabei sehr strikte, vorgegebene Prozesse einzuhalten wie z.B. das Starten eines Programmiermodus und eine Identifikation der Komponente in der Engineering-Komponente in einem sehr kurzen Zeitfenster. Für eine On-Site-Provisionierung ist weiterhin ein physischer Zugang zu allen in einem Gebäude verteilten Komponenten z.B. für die Betätigung der Tasten notwendig. Dies kann bei verbauten, eingebauten oder unter Putz angebrachten Komponenten schwierig sein. Bei der On-Site-Provisionierung kann es auch nachteilig sein, dass jede Komponente einzeln in den Programmiermodus versetzt und identifiziert werden muss. Erst wenn eine Identifikation und Adressvergabe einer Komponente abgeschlossen ist, kann die nächste Komponente identifiziert und konfiguriert werden. Dadurch kann sich die On-Site-Provisionierung bei einem Gebäudeautomationssystem mit einer Vielzahl an Komponenten zeitlich sehr aufwendig gestalten. Weiterhin muss bei der On-Site-Provisionierung bereits zum Zeitpunkt der Provisionierung die Funktion bzw. Aufgabe der jeweiligen Komponente ersichtlich sein - d.h. es muss z.B. bereits klar sein, welcher Schaltaktor für die Ansteuerung eines jeweiligen Leuchtmittels zuständig ist. Ist dies bei der Installation bzw. Provisionierung beispielsweise aus der Systemdokumentation oder im Schaltschrank nicht genau ersichtlich, so ist insbesondere eine Funktionszuweisung zu einer Komponente nur schwer möglich. Auf kurzfristige Abweichungen kann bei einer On-Site-Provisionierung damit nur in einem sehr geringen Maß eingegangen werden.

Aus der Schrift WO 2008/027964 A2 ist ein Verfahren zum Verknüpfen von Komponenten in einem Gebäudemanagementsystem bekannt. Dabei werden die jeweiligen Komponenten zuerst physisch installiert, wobei z.B. eine physische Position, Komponententyp, Konfiguration, etc. der jeweiligen Komponente in Form eines Plans oder Diagramms erfasst werden kann. Im Rahmen einer Basiskonfiguration werden jenen Komponenten, welche zu einer drahtlosen Kommunikation eingerichtet sind, Identifikationsdaten (z.B. Komponenten-Identifikation, Netzwerkname, MAC-Adresse, etc.) z.B. mittels eines Mobilgeräts zugewiesen. Zum Verknüpfen der neu installierten und basiskonfigurierten Komponente mit bereits vorhandenen Komponenten wird die Komponenten-Identifikation der neu installierten und basiskonfigurierten Komponente mittels des Mobilgeräts an die bereits vorhandenen Komponenten kommuniziert. Das in der Schrift WO 2008/027964 A2 beschriebene Verfahren weist allerdings den Nachteil auf, dass nach der Installation jede neu installierte Komponente im Rahmen einer Basiskonfiguration mit Identifikationsdaten versehen werden muss, bevor eine Verknüpfung mit bereits installierten Komponenten erfolgen kann. Das Verfahren wird dadurch komplex und aufwendig.

Die Schrift EP 2 704 365 A1 offenbart ein Verfahren zum Einrichten einer Steuerbeziehung zwischen zumindest zwei vernetzten Einheiten. Dabei wird eine Identifikation einer ersten Einheit von einer Konfigurationseinheit aus einem maschinenlesbaren Tag ausgelesen und auf ein maschinenlesbares Tag einer zweiten Einheit geschrieben. Von diesem Tag wird die Identifikation der ersten Einheit dann von einer Steuereinheit der zweiten Einheit eingelesen und eine Steuerverbindung zwischen den Einheiten aufgebaut.

### Darstellung der Erfindung

Der Erfindung liegt daher die Aufgabe zugrunde, ein Verfahren zur Provisionierung und Konfiguration von Raumautomationskomponenten eines Gebäudeautomationssystems mit einer Konfigurationseinheit anzugeben, bei welchem ein Aufwand für eine erstmalige Provisionierung bzw. Konfiguration reduziert, die Provisionierung flexibler gestaltet und Erweiterungen bzw. ein weiteres Engineering des Gebäudeautomationssystems vereinfacht werden.

Diese Aufgabe wird durch ein Verfahren der eingangs genannten Art mit den Merkmalen des unabhängigen Patentanspruchs gelöst. Vorteilhafte Ausführungsformen der vorliegenden Erfindung sind in den abhängigen Ansprüchen beschrieben.

Erfindungsgemäß erfolgt die Lösung der Aufgabe durch ein Verfahren der eingangs erwähnten Art, bei welchem in einer Installationsphase von einer zentralen Konfigurati-onseinheit des Gebäudeautomationssystems jeder Raumautomationskomponente eine eindeutige, temporäre Adresse zugeordnet wird. Zusätzlich wird für jede zu konfigurierende Raumautomationskomponente und die jeweils zugehörige temporäre Adresse ein eindeutiger Erkennungscode definiert und an die jeweilige Raumautomationskomponente übermittelt. Nach der Installation bzw. Montage der Raumautomationskomponenten wird das Gebäudeautomationssystem zur Gänze oder teilweise in einen Konfigurationsmodus versetzt. Im Konfigurationsmodus werden die jeweiligen installierten und zu konfigurierenden Raumautomationskomponenten angewiesen, ihren jeweiligen Erkennungscode auszusenden. Der jeweilige Erkennungscode der jeweiligen Raumautomationskomponente wird mit Hilfe einer mobilen Einheit ermittelt und an die zentrale Konfigurationseinheit zur Identifikation weitergeleitet. Dabei ist eine eindeutige Identifikation der jeweiligen Raumautomationskomponente und dem zugehörigen eindeutigen Erkennungscode durch die mobile Einheit erforderlich. Nach einer erfolgreicher Identifikation und Assoziation mit der zugehörigen temporären Adresse wird die jeweilige identifizierte Raumautomationskomponente auf der mobilen Einheit gekennzeichnet und kann dann für die weitere Konfiguration ausgewählt werden.

Der Hauptaspekt der erfindungsgemäß vorgeschlagenen Lösung besteht darin, dass sich beim so genannten Engineering-Prozess insbesondere durch einen Einsatz einer eindeutigen, temporären Adresse sowie eine zugehörigen, eindeutigen Erkennungscode bei jeder Raumautomationskomponente ein zeitlicher Aufwand erheblich reduzieren lässt. Die Raumautomationskomponenten müssen beispielsweise nicht mehr mit einer genauen Montageposition gekennzeichnet oder vorkonfiguriert werden. Es können auch kurzfristig Abweichungen von einem geplanten Aufbau des Gebäudeautomationssystems realisiert werden. Weiterhin wird eine Wahrscheinlichkeit einer Fehlkonfiguration durch die Identifikation der jeweiligen Komponente mittels des eindeutigen Erkennungscode und eine optische Kennzeichnung von identifizierten, und damit konfigurierbaren Komponenten auf der mobilen Einheit erheblich reduziert. Auch Erweiterungen eines Gebäudeautomationssystems können mit Hilfe des erfindungsgemäßen Verfahrens auf einfache und zeitsparende Weise durchgeführt werden.

Eine zweckmäßige Ausgestaltung der Erfindung sieht vor, dass der jeweilige eindeutige Erkennungscode von der jeweilige Raumautomationskomponente als optisches Signal und/oder als Nahfeld-Funksignal bzw. als Funksignal mit sehr eingeschränkter Reichweite ausgesendet wird, um die eindeutige Identifikation der jeweiligen Raumkomponente zu ermöglichen. Je nach Ausgestaltung der jeweiligen Raumautomationskomponente oder ihrer Montageposition kann der Erkennungscode von dieser Komponente entweder als optisches Signal oder als Nahfeld-Funksignal oder optisches Signal und als Funksignal in der Konfigurationsphase ausgegeben werden. Durch das Erfassen und Ermitteln des Erkennungscodes mit der mobilen Einheit kann dann die jeweilige Raumautomationskomponente rasch und mit einer geringen Fehlerwahrscheinlichkeit von der Konfigurationseinheit identifiziert werden.

Bei Raumautomationskomponenten, welche mit einer Leuchteinheit ausgestattet sind (z.B. LED, Display mit Hintergrundbeleuchtung) oder welche mit einer Leuchteinheit interagieren (z.B. Aktor für Beleuchtungskörper), kann diese zugehörige, für eine operativen Betrieb notwendige Leuchteinheit für das Aussenden des Erkennungscodes als optisches bzw. Lichtsignal eingesetzt werden. D.h. die zur jeweiligen Raumautomationskomponente gehörende oder zugeordnete Leuchteinheit wird für die Ausgabe des Erkennungscodes als optisches Signal in der Konfigurationsphase genutzt. Eine Geschwindigkeit der Aussendung des Erkennungscodes bzw. des darauf basierenden optischen Signals richtet sich dabei an die jeweilige Lichttechnologie der Leuchteinheit der jeweiligen Raumautomationskomponente. So können beispielsweise Leuchteinheiten wie z.B. LEDs als schnelle Signalgeber den Erkennungscode mit einer höheren Geschwindigkeit ausgeben als langsamere Leuchteinheiten wie z.B. Beleuchtungskörper wie Leuchtstofflampen.

Alternativ oder zusätzlich, kann der jeweilige Erkennungscode als Nahfeld-Funksignal von der jeweiligen Raumautomationskomponente ausgesendet werden. Dabei ist wichtig, dass beim Empfang des Nahfeld-Funksignals durch die mobile Einheit eine Position des Senders bzw. der jeweiligen Raumautomationskomponente relativ genau festgestellt werden kann. Daher werden idealerweise für ein Aussenden des Nahfeld-Funksignals Technologien mit geringer Reichweite wie z.B. Radio-Frequency-Identification (RFID) oder Nahfeld-Kommunikation (NFC) verwendet. Für die Ausgabe des Erkennungscodes als Nahfeld-Funksignal wird dann ein zur jeweiligen Raumkomponente gehörender RFID-(Radio-Frequency-Idenification)-Chip oder NFC-(Nahfeldkommunikations-)-Chip eingesetzt. Eine für die Aussendung des Erkennungscodes notwendige Aktivierung des RFID- bzw. NFC-Chips wird - wie beim Aussenden des Erkennungscodes als optisches Signal - durch die Konfigurationseinheit beim Start oder bei Aktivierung der Konfigurationsphase ausgelöst. Idealerweise werden Raumautomationskomponenten ohne zugehörige Leuchteinheit oder z.B. eingebaute oder verbaute Raumautomationskomponenten mit einem RFID- oder NFC-Chip versehen, um den Erkennungscode als Funksignal aussenden zu können. Für eine raschere und bessere Ermittlung des Erkennungscodes durch die mobile Einheit kann beispielsweise eine Raumautomationskomponente mit Leuchteinheit auch mit einem RFID- bzw. NFC-Chip versehen sein und den Erkennungscode zusätzlich als Funksignal aussenden.

Es ist von Vorteil, wenn als eindeutiger Erkennungscode ein redundanter, fehlerkorrigierender Code zum Einsatz kommt. Damit kann sehr einfach sichergestellt werden, dass der Erkennungscode möglichst fehlerfrei von der jeweiligen Raumautomationskomponente ausgesendet wird. Bei redundanten, fehlerkorrigierenden Codes werden beispielsweise Übertragungs-, Ausgabe- und/oder Speicherfehler anhand der Redundanz (z.B. in Form von zusätzlichen Bits) erkannt und möglichst korrigiert. Durch die Verwendung eines redundanten, fehlerkorrigierenden Codes kann eine fehlerhafte Identifikation z.B. anhand eines fehlerhaften Erkennungscodes der Raumautomationskomponente sehr leicht minimiert werden. Weiterhin werden durch die Verwendung eines geeigneten redundanten, fehlerkorrigierenden Codes mögliche Fehlerquellen aufgrund von unterschiedlichen Ausgabegeschwindigkeiten vermieden, welche durch einen Einfluss der eingesetzten Leuchttechnologie (z.B. LED, Leuchtstofflampe, etc.) auf die Ausgabegeschwindigkeit zustande kommen.

Bei der mobilen Einheit werden vorteilhafter Weise zumindest eine Einheit zum Erfassen bzw. zur Ermittlung des Erkennungscodes, ein optischen Sensor zum Erfassen einer lokalen Umgebung der mobilen Einheit und eine Anzeige- und Eingabeeinheit, insbesondere ein Touchscreen, zur Verfügung gestellt. Dabei kann für einen als optisches Signal ausgesendeten Erkennungscode in vorteilhafter Weise der optische Sensor der mobilen Einheit (z.B. Kamera) zum Erfassen des ausgesendeten, optischen Signals genutzt werden. In Kombination mit einer elektronischen Bildverarbeitung wird aus dem optischen Signal der Erkennungscode ermittelt. Wird der Erkennungscode von Raumkomponente als Funksignal ausgesendet, so muss die mobile Einheit neben dem optischen Sensor auch eine Einheit zum Empfangen und Auswerten von Funksignalen (z.B. NFC-Einheit) aufweisen.

Zweckmäßiger Weise wird als mobile Einheit ein mobiles Endgerät wie z.B. ein Smartphone oder ein so genannter Tablet-PC verwendet. Für die Aktivierung der Konfigurationsphase und für die Durchführung der Konfiguration wird eine auf der mobilen Einheit befindliche bzw. installierte Applikation eingesetzt. Es können damit sehr einfach bereits bei einem Nutzer bzw. Monteur verfügbare mobile Endgeräte verwendet werden, wobei einfach die für die Konfigurationsphase notwendige Applikation auf das jeweilige mobile Endgerät (z.B. Smartphone, Tablet-PC, etc.) geladen werden bzw. auf diesem installiert muss. Weiterhin weisen heutzutage gebräuchliche, mobile Endgeräte wie z.B. Smartphones, Tablet-PCs, etc. üblicherweise optische Sensoren zum Erfassen einer lokalen Umgebung bzw. zum Erfassen von optischen Signalen (z.B. Kamera) auf. Häufig sind moderne Smartphones mittlerweile auch mit einer Einheit für Nahfeldkommunikation und damit zum Erfassen von RFID- oder NFC-Chips ausgesendeten Funksignalen ausgestattet. Meist weisen mobile Endgeräte wie z.B. Smartphone oder Tablet-PC auch eine eingabefähige Anzeige - einen so genannten Touchscreen - auf, sodass auf sehr einfache Weise eine identifizierte Raumautomationskomponente für das weitere Engineering ausgewählt und dann sehr leicht eine Konfiguration der ausgewählten Komponente auf dem mobilen Endgerät durchgeführt werden kann.

Es ist weiterhin günstig, wenn auf der Anzeige- und Eingabeeinheit der mobilen Einheit jene Raumautomationskomponenten angezeigt werden, welche sich im Sichtfeld des optischen Sensors bzw. der Kamera der mobilen Einheit befinden. Idealerweise werden dabei bereits identifizierte und mit der temporären Adresse assoziiert Raumautomationskomponenten optisch kennzeichnet. In vorteilhafter Weise können auch bereits erfolgreich, konfigurierte Raumautomationskomponenten optisch gekennzeichnet werden. Durch das unmittelbare optische Feedback auf der Anzeige- und Eingabeeinheit der mobilen Einheit bei einer erfolgreichen Identifikation sowie gegebenenfalls bei einer erfolgreichen Konfiguration kann die Wahrscheinlichkeit einer Fehlkonfiguration maßgeblich reduziert werden. Durch die entsprechende, optische Kennzeichnung der Raumautomationskomponenten auf der Anzeige- und Eingabeeinheit der mobilen Einheit ist für den Nutzer eindeutig ersichtlich, welche Komponenten zu identifizieren, erfolgreich identifiziert, zu konfigurieren bzw. bereits erfolgreich konfiguriert sind. Die Einschränkung auf Anzeigen von Raumautomationskomponenten im Sichtfeld des optischen Sensors der mobilen Einheit - d.h. es werden nur Raumautomationskomponenten auf der Anzeige- und Eingabeeinheit dargestellt, die unmittelbar vom optischen Sensor bzw. der Kamera der mobilen Einheit erfasst werden - ist für den Nutzer die Position der Raumautomationskomponenten im Gebäude bzw. Gebäudekomplex klar ersichtlich.

Für die Kommunikation der mobilen Einheit mit der Konfigurationseinheit, insbesondere die Übertragung des erfassten Erkennungscodes der jeweiligen Raumautomationskomponente und des entsprechenden Feedback bei erfolgreicher Identifikation und Konfiguration, wird eine drahtlose Kommunikationsverbindung genutzt. Idealerweise wird dazu das so genannte Wireless LAN eingesetzt, welches auf vielen heutzutage gebräuchlichen mobilen Endgeräten verfügbar ist. Alternativ oder zusätzlich, kann für die drahtlose Kommunikationsverbindung auch Bluetooth verwendet werden.

### Kurzbeschreibung der Zeichnung

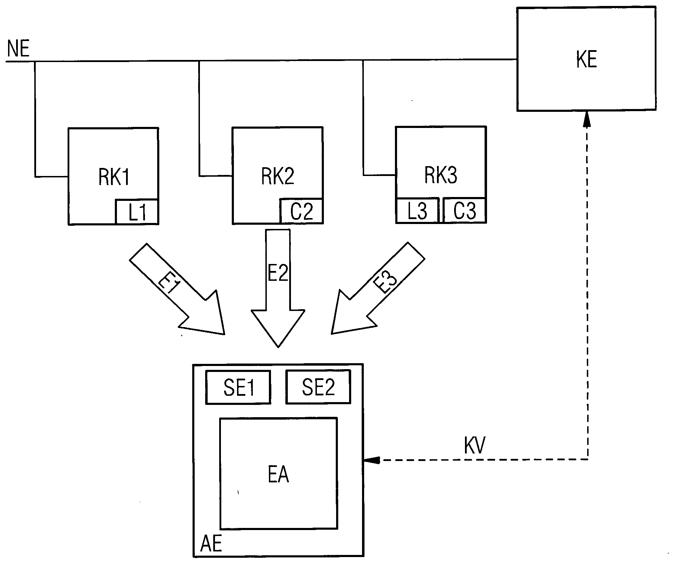

Die Erfindung wird nachfolgend in beispielhafter Weise anhand der beigefügten Figur 1 erläutert. Figur 1 zeigt schematisch einen beispielhaften Ablauf des erfindungsgemäßen Verfahrens zur Provisionierung und Konfiguration von Raumautomationskomponenten eines Gebäudeautomationssystems mit einer Konfigurationseinheit.

### Ausführung der Erfindung

Figur 1 zeigt schematisch beispielshafte zu konfigurierende Raumautomationskomponenten RK1, RK2, RK3, welche Teil eines Gebäudeautomationssystems sind und z.B. für eine Ansteuerung von Beleuchtungs-, Klima- und/oder Heizungssystemen eingesetzt werden können. Für eine Provisionierung und Konfiguration der Raumautomationskomponenten RK1, RK2, RK3 wird eine - meist zentrale - Konfigurationseinheit KE verwendet, welche beispielsweise als so genannte Backend-Einheit ausgeführt sein kann. Die Konfigurationseinheit KE steht direkt mit dem Gebäudeautomationssystem in Verbindung.

Die zu konfigurierenden Raumautomationskomponenten RK1, RK2, RK3 werden bei einer Installation über ein Kommunikationsnetzwerk NE wie z.B. ein EIB/KNX- oder LON-System in das Gebäudeautomationssystem eingebunden. Dabei muss für eine Integration der jeweiligen Raumautomationskomponente RK1, RK2, RK3 in das Gebäudeautomationssystem und einen reibungslosen Betrieb üblicherweise die jeweilige Raumautomationskomponente RK1, RK2, RK3 mittels Provisionierung und Konfiguration identifiziert sowie eindeutig adressierbar gemacht werden und eine Position der jeweiligen Raumautomationskomponente RK1, RK2, RK3 im Gebäudeautomationssystem bekannt gegeben werden. Gemäß dem erfindungsgemäßen Verfahren wird dazu jeder Raumautomationskomponente RK1, RK2, RK3 von der Konfigurationseinheit KE eine eindeutige, temporäre Adresse zugewiesen. Für jede Raumautomationskomponente RK1, RK2, RK3 und die jeweils zugehörige temporäre Adresse wird dann von der Konfigurationseinheit KE ein eindeutiger Erkennungscode E1, E2, E3 definiert. Für die jeweiligen eindeutigen Erkennungscodes E1, E2, E3, welche beispielsweise auf Basis der jeweiligen eindeutigen, temporären Adresse der jeweiligen Raumautomationskomponente RK1, RK2, RK3 definiert werden, kommt idealerweise ein redundanter, fehlerkorrigierender Code zum Einsatz.

Der von der Konfigurationseinheit KE definierte eindeutige Erkennungscode E1, E2, E3 wird an die entsprechende Raumautomationskomponenten RK1, RK2, RK3 übermittelt. So wird bei den in Figur 1 beispielhaft dargestellten Raumautomationskomponenten RK1, RK2, RK3 von Konfigurationseinheit KE z.B. einer ersten Raumautomationskomponente RK1 eine erste temporäre Adresse und damit ein erster Erkennungscode E1 zugeordnet, einer zweiten Raumautomationskomponente RK2 eine zweite temporäre Adresse und ein zweiter Erkennungscode E2 und einer dritten Raumautomationskomponente RK3 eine dritte temporäre Adresse und ein dritter Erkennungscode E3.

Nach Abschluss der Installation des Gebäudeautomationssystems oder eines Teils des Gebäudeautomationssystems (z.B. bei einer Erweiterung) kann ein Konfigurationsmodus für das gesamte Gebäudeautomationssystem oder für einen z.B. neu installierten Teil des Gebäudeautomationssystems aktiviert werden. Für ein Aktivieren des Konfigurationsmodus, die Provisionierung und Konfiguration der Raumautomationskomponenten RK1, RK2, RK3 ist beispielsweise eine mobile Einheit AE wie z.B. ein Smartphone und/oder ein Tablet-PC vorgesehen. Dazu kann auf der mobilen Einheit AE eine entsprechende mobile Applikation installiert sein, über welche der Konfigurationsmodus gestartet werden kann.

Durch das Aktivieren des Konfigurationsmodus werden die neu installierten bzw. zu konfigurierenden Raumautomationskomponenten RK1, RK2, RK3 von der Konfigurationseinheit KE angewiesen, ihren jeweiligen Erkennungscode E1, E2, E3 auszusenden. Der von der jeweiligen Raumautomationskomponente RK1, RK2, RK3 ausgesendete Erkennungscode E1, E2, E3 kann dann mit Hilfe der mobilen Einheit AE ermittelt, wobei der Erkennungscode E1, E2, E3 von der jeweiligen Raumautomationskomponente RK1, RK2, RK3 als optisches Signal bzw. Lichtsignal und/oder als Funksignal mit geringer Reichweite bzw. Nahfeld-Funksignal ausgesendet werden kann - je nach Ausführungsform und/oder Montageposition der jeweiligen Raumautomationskomponente RK1, RK2, RK3.

So weist die beispielhafte erste Raumautomationskomponente in Figur 1 beispielsweise eine Leuchteinheit L1 auf wie z.B. eine LED oder ein Display mit Hintergrundbeleuchtung. Mit Hilfe dieser Leuchteinheit L1 kann im Konfigurationsmodus der eindeutige Erkennungscode E1 der Raumautomationskomponente RK1 als optisches Signal bzw. Lichtsignal ausgesendet werden. Weiterhin ist es denkbar, dass eine über eine Raumautomationskomponente RK1 angesteuertes Leuchteinheit L1 für das Aussenden des eindeutigen Erkennungscode E1 genutzt wird. Das optische Signal E1 wird dann mit der mobilen Einheit AE erfasst und in Kombination mit einer elektronischen Bildverarbeitung aus dem optischen Signal der eindeutige Erkennungscode E1 der Raumautomationskomponenten RK1 ermittelt.

Bei Raumautomationskomponenten ohne Leuchteinheit oder eingebauten bzw. verbauten Raumautomationskomponenten wie z.B. bei der in Figur 1 beispielhaft dargestellten zweiten Raumautomationskomponente RK2 kann der zugehörige eindeutige Erkennungscode E2 im Konfigurationsmodus als Nahfeld-Funksignal E2 ausgesendet werden. Für die Ausgabe des Erkennungscodes E2 als Nahfeld-Funksignal E2 kann ein zur zweiten Raumautomationskomponente RK2 gehörender RFID- oder ein NFC-Chip C2 verwendet werden. Dieser RFID- oder NFC-Chip C2 wird bei Aktivierung der Konfigurationsmodus von der Konfigurationseinheit KE aktiviert und sendet dann den Erkennungscode E2 mittels Nahfeldkommunikation als Funksignal E2 aus. Das Nahfeld-Funksignal E2 kann bei entsprechender lokaler Annäherung der mobilen Einheit AE erfasst und daraus der Erkennungscode E2 ermittelt werden. Dabei ist es wichtig, dass beim Empfang des Funksignals E2 durch die mobile Einheit AE eine Position der Raumautomationskomponente RK2 relativ genau festgestellt werden kann.

Alternativ oder zusätzlich kann eine Raumautomationskomponente wie z.B. die in Figur 1 beispielhaft dargestellte dritte Raumautomationskomponente RK3 auch dazu eingerichtet sein, ihren Erkennungscode E3 sowohl als optisches Signal E3 als auch als Nahfeld-Funksignal E3 auszusenden. Dazu weist die beispielhafte dritte Raumkomponente RK3 sowohl eine Leuchteinheit L3 (z.B. LED, beleuchtetes Display) als auch einen zugehörigen RFID- oder NFC-Chip C3 auf, welcher bei Beginn des Konfigurationsmodus von der Konfigurationseinheit KE aktiviert wird. Die von der dritten Raumautomationskomponente RK3 ausgesendeten optischen Signale E3 und Funksignale E3 mit geringer Reichweite können bei entsprechender lokaler Annäherung von der mobilen Einheit AE erfasst und ausgewertet werden.

Weiterhin besteht die Möglichkeit, dass im Konfigurationsmodus der Erkennungscode E1, E3 der jeweiligen Raumautomationskomponenten RK1, RK3 nur als optisches Signal oder Lichtsignal ausgesendet wird. Dazu müssen alle Raumautomationskomponenten RK1, RK3 des Gebäudeautomationssystems bzw. des jeweils zu konfigurierenden Systemteils eine entsprechend Leuchteinheit L1, L3 aufweisen oder eine entsprechende Leuchteinheit ansteuern. Alternativ kann der Erkennungscode E2, E3 im Konfigurationsmodus auch nur als Funksignal mit geringer Reichweite bzw. Nahfeld-Funksignale ausgegeben werden, sofern alle Raumautomationskomponenten RK2, RK3 einen entsprechenden RFID- oder NFC-Chip C2, C3 aufweisen.

Für die Provisionierung und Konfiguration der Raumautomationskomponente RK1, RK2, RK3 sowie zum Erfassen und Ermitteln der ausgesendeten Erkennungscodes E1, E2, E3 weist die mobile Einheit AE zumindest einen optischen Sensor SE1 wie z.B. eine Kamera, eine Anzeige- und Eingabeeinheit EA sowie eine Einheit SE2 zur Ermittlung des Erkennungscodes E1, E2, E3 auf. Mit dem optischen Sensor SE1 können die Raumautomationskomponenten RK1, RK2, RK3 im Sichtfeld des optischen Sensors SE1 - d.h. in einer lokalen Umgebung der mobilen Einheit AE - erfasst werden. Auf der Anzeige- und Eingabeeinheit EA kann dann die vom optischen Sensor SE1 erfasste lokale Umgebung der mobilen Einheit AE wie z.B. die im Sichtfeld des optischen Sensors SE1 befindlichen Raumautomationskomponenten RK1, RK2, RK3 angezeigt werden. Für eine einfachere Handhabung und eine leichte Eingabe kann die Anzeige- und Eingabeeinheit EA als so genannter Touchscreen ausgestaltet sein. Als Einheit SE2 zur Ermittlung des Erkennungscodes E1, E2, E3 kann die mobile Einheit AE beispielsweise eine NFC-Einheit bzw. einen NFC-fähigen Sensor aufweisen, wobei diese Einheit SE2 insbesondere für ein Erfassen und Ermitteln von als Funksignal mit geringer Reichweite ausgesendeten Erkennungscodes E2, E3 dient. Für das Erfassen der als optisches Signal ausgesendeten Erkennungscodes E1, E3 kann der optische Sensor SE1 der mobilen Einheit AE eingesetzt werden.

Nachdem das von der jeweiligen Raumautomationskomponente RK1, RK2, RK3 ausgesendete optische Signal und/oder Funksignal E1, E2, E3 von der mobilen Einheit AE erfasst bzw. der jeweils entsprechende Erkennungscode E1, E2, E3 ermittelt wurde, wird der erfasste bzw. ermittelte Erkennungscode E1, E2, E3 über eine Kommunikationsverbindung KV von der mobilen Einheit AE an die Konfigurationseinheit KE übertragen. Als Kommunikationsverbindung KV kann eine drahtlose Kommunikationsverbindung wie z.B. Wireless LAN oder auch Bluetooth verwendet werden.

Von der Konfigurationseinheit KE wird dann die jeweilige Raumautomationskomponente RK1, RK2, RK3 anhand des entsprechenden Erkennungscodes E1, E2, E3 identifiziert. Nach erfolgreicher Identifikation wird die jeweilige Raumautomationskomponente RK1, RK2, RK3 mit der zugehörigen temporären Adresse assoziiert. Weiterhin wird eine erfolgreich identifizierte Raumautomationskomponente RK1, RK2, RK3 auf der Anzeige- und Eingabeeinheit EA, welche alle im Sichtfeld des optischen Sensors SE1 der mobilen Einheit AE befindlichen Raumautomationskomponenten RK1, RK2, RK3 anzeigt, optisch gekennzeichnet.

Eine derartig optisch gekennzeichnete Raumautomationskomponente RK1, RK2, RK3 kann dann über die Anzeige- und Eingabeeinheit EA der mobilen Einheit AE für die weitere Konfiguration ausgewählt werden.

Durch eine Auswahl einer im Sichtfeld des optischen Sensors SE1 der mobilen Einheit AE befindlichen und erfolgreich identifizierten Raumautomationskomponente RK1, RK2, RK3 kann von einem Nutzer (z.B. Monteur, Bediener, etc.) mit der weiteren Konfiguration bzw. dem weiteren Engineering der ausgewählten Raumautomationskomponente RK1, RK2, RK3 begonnen werden. Dabei sind beispielsweise unterschiedliche Konfigurationsvarianten möglich.

Bei einer möglichen Variante - einer so genannten preengineered Konfiguration - ist eine vorkonfigurierte Funktion des gesamten Gebäudeautomationssystems vorhanden (z.B. mit der nach dem KNX-Standard standardisierten Engineering-Tool-Software - kurz KNX ETS). Entsprechend einer vorkonfigurierten Topologie erfolgt eine Zuweisung für die jeweilige Raumautomationskomponente RK1, RK2, RK3. Damit verbunden wird beispielsweise eine Aktualisierung von der temporären Adresse der jeweiligen Raumautomationskomponente RK1, RK2, RK3 hin zu einer permanenten Adresse für die jeweilige Raumautomationskomponente RK1, RK2, RK3 durchgeführt, über welche die jeweilige Raumautomationskomponenten RK1, RK2, RK3 im Gebäudeautomationssystem ansprechbar ist. D.h. vom Benutzer kann z.B. aus einer Liste von in der jeweiligen Konfiguration existierenden Geräten im Gebäudeautomationssystem die aktuell konfigurierte Raumautomationskomponente RK1, RK2, RK3 ausgewählt werden.

Eine weitere, mögliche Konfigurationsvariante ist eine so genannte Ad-hoc-Konfiguration bzw. ein so genanntes Ad-hoc-Engineering. Dabei erfolgt anhand von vordefinierten Templates, von welchen beispielsweise Geräte, Funktionalitäten und/oder Zusammenhänge (z.B. Leuchte - Taste oder Fan-Coil - Raumbediengerät) beschrieben werden, eine Verknüpfung bzw. ein Binding durch eine gezielte Konfiguration. D.h.: es wird zuerst ein Template ausgewählt; dann ein (auf der Anzeige- und Eingabeeinheit EA als erfolgreich identifiziert gekennzeichnete) Komponente RK1, RK2, RK3 gewählt und zugeordnet sowie gegebenenfalls mit einem spezifischen Namen versehen; zuletzt erfolgt mittels der Konfigurationseinheit KE ein so genanntes Programming, bei dem Template und Komponente RK1, RK2, RK3 üblicherweise mit einem so genannten Programming- oder Engineering-Tool der Konfigurationseinheit KE verknüpft werden.

Nach erfolgreicher und vollständig abgeschlossener Konfiguration einer Raumautomationskomponente RK1, RK2, RK3 kann dem Nutzer auf der Anzeige- und Eingabeeinheit EA der mobilen Einheit AE ein entsprechendes optisches Feedback gegeben werden. Durch das jeweilige optische Feedback, wenn eine Komponente RK1, RK2, RK3 erfolgreich identifiziert und konfiguriert wurde, kann eine Wahrscheinlichkeit von Fehlkonfigurationen erheblich reduziert werden und für den Nutzer ist ein Provisionierungs- und Konfigurationsstatus der neu installierten Raumautomationskomponente RK1, RK2, RK3 jederzeit ersichtlich.

## Patentansprüche

1. Verfahren zur Provisionierung und Konfiguration von Raumautomationskomponenten eines Gebäudeautomationssystems mit einer zentralen Konfigurationseinheit (KE), welche in direkter Verbindung mit dem Gebäudeautomationssystem steht, ***dadurch gekennzeichnet, dass*** bei einer Installation jeder zu konfigurierenden Raumautomationskomponente (RK1, RK2, RK3) eine eindeutige, temporäre Adresse von der zentralen Konfigurationseinheit (KE) zugeordnet wird, dass für jede zu konfigurierende Raumautomationskomponente (RK1, RK2, RK3) und die jeweils zugehörige temporäre Adresse ein eindeutiger Erkennungscode (E1, E2, E3) definiert wird, welcher an die jeweilige Raumautomationskomponente (RK1, RK2, RK3) übermittelt wird, dass in einem Konfigurationsmodus die installierte, zu konfigurierenden Raumautomationskomponenten (RK1, RK2, RK3) von der zentralen Konfigurationseinheit (KE) angewiesen werden, ihren jeweiligen Erkennungscode (E1, E2, E3) auszusenden, dass der jeweilige Erkennungscode (E1, E2, E3) der jeweiligen Raumautomationskomponente (RK1, RK2, RK3) mit Hilfe einer mobilen Einheit (AE) ermittelt und an die zentrale Konfigurationseinheit (KE) zur Identifikation gesendet wird, und dass nach erfolgreicher Identifikation und Assoziation mit der zugehörigen temporären Adresse jede identifizierte Raumautomationskomponente (RK1, RK2, RK3) auf der mobilen Einheit (AE) optisch gekennzeichnet wird und für die weitere Konfiguration ausgewählt werden kann.

2. Verfahren nach Anspruch 1, ***dadurch gekennzeichnet, dass*** der jeweilige Erkennungscode (E1, E2, E3) von der jeweiligen Raumautomationskomponente (RK1, RK2, RK3) als optisches Signal und/oder als Funksignal mit geringer Reichweite ausgesendet wird.

3. Verfahren nach Anspruch 2, ***dadurch gekennzeichnet, dass*** für eine Ausgabe des jeweiligen Erkennungscodes (E2, E3) als optisches Signal ein zur Raumautomationskomponente (RK2, RK3) gehörende Leuchteinheit (L1, L3) verwendet wird.

4. Verfahren nach Anspruch 2, ***dadurch gekennzeichnet, dass*** für die Ausgabe des jeweiligen Erkennungscode (E1, E3) als Funksignal mit geringer Reichweite ein zur jeweiligen Raumautomationskomponenten (RK1, RK3) gehörender RFID-Chip oder NFC-Chip (C1, C3) verwendet wird.

5. Verfahren nach Anspruch 4, ***dadurch gekennzeichnet, dass*** der an der zur jeweiligen Raumautomationskomponente (RK1, RK3) gehörende RFID-Chip oder NFC-Chip (C1, C3) durch die Konfigurationseinheit (KE) aktiviert wird.

6. Verfahren nach einem der vorangegangenen Ansprüche, ***dadurch gekennzeichnet, dass*** bei der mobilen Einheit (AE) zumindest ein optischer Sensor (SE1) zum Erfassen einer lokalen Umgebung, eine Einheit zur Ermittlung des Erkennungscodes (SE2) und eine Anzeige- und Eingabeeinheit (EA), insbesondere ein Touchscreen, vorgesehen werden.

7. Verfahren nach einem der vorangegangenen Ansprüche, ***dadurch gekennzeichnet, dass*** als mobile Einheit (AE) ein mobiles Endgerät, insbesondere einem Smartphone und/oder einem Tablet-PC, verwendet wird, wobei für ein Aktivieren und Durchführen der Konfiguration eine mobile Applikation verwendet wird.

8. Verfahren nach einem der Ansprüche6 oder 7, ***dadurch gekennzeichnet, dass*** auf der Anzeige- und Eingabeeinheit (EA) der mobilen Einheit (AE) Raumautomationskomponenten (RK1, RK2, RK3) im Sichtfeld des optischen Sensors (SE1) der mobilen Einheit (AE) angezeigt werden, wobei identifizierte Raumautomationskomponenten (RK1, RK2, RK3) optisch gekennzeichnet werden.

9. Verfahren nach einem der vorangegangenen Ansprüche, ***dadurch gekennzeichnet, dass*** die mobile Einheit (AE) über eine drahtlose Kommunikationsverbindung (KV), insbesondere Wireless LAN, mit der zentralen Konfigurationseinheit (KE) verbunden wird.

## Claims

1. Method for provisioning and configuration of room automation components of a building automation system with a central configuration unit (KE), which is directly connected to the building automation system, ***characterised in that***, during an installation of each room automation component (RK1, RK2, RK3) to be configured a unique, temporary address is assigned by the central configuration unit (KE), that for each room automation component (RK1, RK2, RK3) to be configured and the respective associated temporary address a unique recognition code (E1, E2, E3) is defined, which is transferred to the respective room automation component (RK1, RK2, RK3), that the installed room automation components (RK1, RK2, RK3) to be configured are instructed by the central configuration unit (KE) in a configuration mode to send out their respective recognition code (E1, E2, E3), that the respective recognition code (E1, E2, E3) of the respective room automation component (RK1, RK2, RK3) is established with the aid of a mobile unit (AE) and sent to the central configuration unit (KE) for identification, and that after successful identification and association with the associated temporary address, each identified room automation component (RK1, RK2, RK3) is indicated optically on the mobile unit (AE) and can be selected for further configuration.

2. Method according to claim 1, ***characterised in that*** the respective recognition code (E1, E2, E3) of the respective room automation component (RK1, RK2, RK3) is sent out as an optical signal and/or as a short-range radio signal.

3. Method according to claim 2, ***characterised in that*** a light unit (L2, L3) belonging to the room automation component (RK2, RK3) is used for an output of the respective recognition code (E2, E3) as an optical signal.

4. Method according to claim 2, ***characterised in that*** an RFID chip or NFC chip (C1, C3) belonging to the respective room automation component (RK1, RK3) is used for the output of the respective recognition code (E1, E3) as a short-range radio signal.

5. Method according to claim 4, ***characterised in that*** the RFID chip or NFC chip (C1, C3) belonging to the respective room automation component (RK1, RK3) is activated by the configuration unit (KE).

6. Method according to one of the preceding claims, ***characterised in that*** at least one optical sensor (SE1) for detecting a local environment, a unit for establishing the recognition code (SE2) and a display and input unit (EA), in particular a touchscreen, are provided in the mobile unit (AE).

7. Method according to one of the preceding claims, ***characterised in that*** a mobile terminal, in particular a smartphone and/or a tablet PC, is used as the mobile unit (AE), wherein a mobile application is used for activating and carrying out the configuration.

8. Method according to one of claims 6 or 7, ***characterised in that*** room automation components (RK1, RK2, RK3) in the field of view of the optical sensor (SE1) of the mobile unit (AE) are displayed on the display and input unit (EA) of the mobile unit (AE), wherein identified room automation components (RK1, RK2, RK3) are indicated optically.

9. Method according to one of the preceding claims, ***characterised in that*** the mobile unit (AE) is connected to the central configuration unit (KE) via a wireless communication connection (KV), in particular a wireless LAN.

## Revendications

1. Procédé d'approvisionnement et configuration de composants d'automatisation de pièces d'un système domotique comprenant une unité de configuration centrale (KE) qui est en liaison directe avec le système de domotique, **caractérisé en ce que** lors d'une installation, une adresse temporaire univoque est attribuée par l'unité de configuration centrale (KE) à chaque composant d'automatisation de pièces (RK1, RK2, RK3) à configurer, qu'un code d'identification univoque (E1, E2, E3) est défini pour chaque composant d'automatisation de pièces (RK1, RK2, RK3) à configurer et l'adresse temporaire univoque respective, lequel est transmis au composant d'automatisation de pièces (RK1, RK2, RK3) respectif, que dans un mode de configuration, les composants d'automatisation de pièces (RK1, RK2, RK3) à configurer installés, reçoivent l'instruction de la part de l'unité de configuration centrale (KE), d'envoyer leur code d'identification (E1, E2, E3) respectif, que le code d'identification (E1, E2, E3) respectif du composant d'automatisation de pièces (RK1, RK2, RK3) respectif est déterminé à l'aide d'une unité mobile (AE) et envoyé à l'unité de configuration centrale (KE) pour l'identification et qu'après une identification et une association réussies avec l'adresse temporaire, chaque composant d'automatisation de pièces (RK1, RK2, RK3) est identifié de façon visuelle sur l'unité mobile (AE) et peut être sélectionné pour la suite de la configuration.

2. Procédé selon la revendication 1, **caractérisé en ce que** le code d'identification (E1, E2, E3) respectif du composant d'automatisation de pièces (RK1, RK2, RK3) respectif est envoyé en tant que signal visuel et/ou signal radio avec une faible portée.

3. Procédé selon la revendication 2, **caractérisé en ce que** pour émettre le code d'identification (E2, E3) respectif en tant que signal visuel, on emploie une unité d'éclairage (L1, L3) faisant partie du composant d'automatisation de pièces (RK2, RK3).

4. Procédé selon la revendication 2, **caractérisé en ce que** pour émettre le code d'identification (E1, E3) respectif en tant que signal radio à faible portée, on emploie une puce RFID ou NFC (C1, C3) appartenant au composant d'automatisation de pièces (RK1, RK3) respectif.

5. Procédé selon la revendication 4, **caractérisé en ce que** la puce RFID ou NFC (C1, C3) appartenant au composant d'automatisation de pièces (RK1, RK3) respectif est activée par l'unité de configuration (KE).

6. Procédé selon l'une des revendications précédentes, **caractérisé en ce que** dans l'unité mobile (AE), au moins un capteur optique (SE1) pour détecter un environnement local, une unité pour déterminer le code d'identification (SE2) et une unité d'affichage et de saisie (EA), en particulier un écran tactile, sont prévus.

7. Procédé selon l'une des revendications précédentes, **caractérisé en ce qu'**en tant qu'unité mobile (AE), un terminal mobile, en particulier un smartphone et/ou une tablette PC est employé(e), dans lequel une application mobile est employée pour une activation et une exécution.

8. Procédé selon l'une des revendications 6 ou 7, **caractérisé en ce que** des composants d'automatisation de pièces (RK1, RK2, RK3) sont affichés sur l'unité d'affichage et de saisie (EA) de l'unité mobile (AE) dans le champ de vision du capteur optique (SE1) de l'unité mobile (AE), dans lequel des composants d'automatisation de pièces (RK1, RK2, RK3) identifiés sont caractérisés de manière visuelle.

9. Procédé selon l'une des revendications précédentes, **caractérisé en ce que** l'unité mobile (AE) est reliée à l'unité de configuration centrale (KE) par le biais d'une liaison de communication sans fil (KV), en particulier un LAN sans fil.
